Europäisches Patentamt

European Patent Office

Office européen des brevets

(11) Veröffentlichungsnummer : **0 096 107**
**B1**

# (12) EUROPÄISCHE PATENTSCHRIFT

(45) Veröffentlichungstag der Patentschrift :
18.06.86

(21) Anmeldenummer : 82109418.2

(22) Anmeldetag : 12.10.82

(51) Int. Cl.⁴ : **F 16 K 24/00**

(54) **Selbsttätiges Be- und Entlüftungsventil.**

(30) Priorität : 05.06.82 DE 3221377

(43) Veröffentlichungstag der Anmeldung :
21.12.83 Patentblatt 83/51

(45) Bekanntmachung des Hinweises auf die Patenterteilung : 18.06.86 Patentblatt 86/25

(84) Benannte Vertragsstaaten :
AT BE CH FR GB LI NL

(56) Entgegenhaltungen :
EP-A- 0 096 107
DD-A- 72 952
DE-A- 2 047 815
DE-C- 2 252 057

(73) Patentinhaber : BOPP & REUTHER GMBH
Carl-Reuther-Strasse 1
D-6800 Mannheim 31 (DE)

(72) Erfinder : Schmidt, Manfred, Ing. grad.
Rheindammstrasse 10
D-6800 Mannheim 1 (DE)

**Beschreibung**

Die Erfindung bezieht sich auf ein selbsttätiges Be- und Entlüftungsventil für Flüssigkeiten in Rohrleitungen und Behältern, mit einem Hauptventil für die Schnellbe- oder -entlüftung und einem Hilfsventil für die Betriebsentlüftung, die beide von einem gemeinsamen Schwimmer mit Zylindermantel und abgerundetem Kegelboden gesteuert werden, der in einer gehäusefesten, den Schwimmer nach unten und seitlich gegen die Strömung abschirmenden zylindrischen Leitschale mit Trichterboden und Trichtereinströmöffnung axial geführt ist, wobei sich oberhalb des Schwimmers ein separater, vom Schwimmer gegen den Kegelsitz des Hauptventils bewegbarer Ventilteller befindet, der einen sich nach oben erstreckenden Führungszapfen trägt, welcher in einer fest am Ventilauslaß sitzenden Führungsbuchse gleitet.

Bei einem solchen aus der DE-C-22 52 057 bekannten Be- und Entlüftungsventil wird durch die den Schwimmer nach unten und seitlich gegen die Strömung abschirmende gehäusefeste Leitschale verhindert, daß der Schwimmer beim Entlüften der Rohrleitung direkt der Luftströmung ausgesetzt ist und dadurch ungewollt von der Strömungsenergie zusammen mit dem Ventilteller vorzeitig mit nach oben in die Ventilschließstellung gerissen wird. Der Hauptluftstrom strömt somit durch den Ringraum zwischen Leitschale und Ventilgehäuse zum Ventilaustritt, während ein kleinerer Nebenstrom über die Trichtereinströmöffnung der Leitschale zwischen Leitschale und Schwimmer zum Ventilaustritt strömt.

Dieser Nebenstrom muß durch entsprechend großen Querschnitt der Trichtereinströmöffnung der Leitschale einerseits so groß sein, daß der Schwimmer beim Ansteigen des Wasserspiegels im Ventilgehäuse den Ventilteller schnell genug nach oben bis in die Ventilschließstellung bewegen kann, bevor das hauptsächlich in dem Ringraum zwischen Leitschale und Ventilgehäuse aufsteigende Wasser den Ventilsitz erreicht hat. Geht nämlich die Luftströmung am Ventilauslaß bereits in eine Wasserströmung über, so kann der Schwimmer den Ventilteller infolge der wesentlich größeren Massenkräfte des ausströmenden Wassers gegenüber Luft nicht mehr selbsttätig in die Ventilschließstellung bringen, so daß das Ventil offen bleibt. Andererseits darf die Trichtereinströmöffnung in der Leitschale nicht so groß sein, daß beim Entlüften der Rohrleitung, bei dem extrem hohe Luftausströmgeschwindigkeiten im Ventil auftreten können, der Schwimmer mit dem Ventilteller bereits von der Luftströmung in der Leitschale vorzeitig mit nach oben gerissen wird und dadurch die weitere Entlüftung blockiert.

Das bekannte Be- und Entlüftungsventil besitzt einen zylindrischen Schwimmer mit ebener Oberseite, an der sich ein scheibenförmiger Ventilteller abstützt. Durch diese Scheibenform wird der Ventilteller wegen der erforderlichen Festigkeit relativ dickwandig und auch die ebene Oberseite des aus Blech bestehenden Schwimmers benötigt wegen der notwendigen Steifigkeit eine dickere Wandstärke, wodurch Ventilteller und Schwimmer noch verhältnismäßig schwer sind und dadurch höhere Auftriebskräfte mit großem Schwimmervolumen erforderlich machen. Abgesehen hiervon besteht bei diesem Ventil die Gefahr, daß der scheibenförmige Ventilteller in der Ventiloffenstellung von dem in der Leitschale aufsteigenden Luftstrom bei Erreichen einer Grenzgeschwindigkeit vom Schwimmer abgehoben und vorzeitig in die Schließstellung mitgerissen wird. Auch kann sich die Kegelfläche des Ventiltellers nur bei hoher Paßgenauigkeit satt gegen die Kegelfläche des Ventilsitzes legen, so daß bereits ein geringes Verkanten zu Undichtheiten führt.

Aufgabe der Erfindung ist es, ein Be- und Entlüftungsventil zu schaffen, bei dem beim Entlüften ein vorzeitiges Mitreißen des Ventiltellers durch die Luftströmung mit Sicherheit vermieden wird und das ein schnelles Ansprechen und eine sichere Abdichtung bei kompakter Ventilbauweise gewährleistet.

Die Lösung dieser Aufgabe wird in den kennzeichnenden Merkmalen des Anspruchs 1 gesehen.

Dadurch, daß der Ventilteller des Hauptventils als Kugelkalotte ausgebildet ist und der Schwimmer ein nach oben vorspringendes Leitrohr trägt, in dessen Hohlraum der zum Schwimmer hin gekrümmte Außenrand der Kugelkalotte eingreift, kann der bei geöffnetem Hauptventil innerhalb der Leitschale aufsteigende Luftstrom auch bei hohen Ausströmgeschwindigkeiten nicht mehr unter die Kugelkalotte strömen und diese vorzeitig mitreißen. Vielmehr wird der Luftstrom durch das den Außenrand der Kugelkalotte nach oben übergreifende Leitrohr sicher vom Außenrand der Kugelkalotte abgelenkt und auf die Außenwölbung der Kugelkalotte geleitet, wodurch die Kugelkalotte infolge der von außen einwirkenden Kraftvektoren der Strömungsenergie auf dem Schwimmer liegen bleibt. Durch die vom Leitrohr des Schwimmers ausgelöste Ablenkung der Luftsströmung auf die Außenfläche der Kugelkalotte läßt sich gleichzeitig die Trichtereinströmöffnung am Trichterboden und damit der in der Leitschale aufsteigende Nebenstrom vergrößern, so daß beim Ansteigen des Wasserspiegels auch ein beschleunigtes Anheben des Schwimmers und damit ein schnelleres Verschieben der Kugelkalotte in die Ventilschließstellung erzielt wird.

Abgesehen hiervon erhält der Ventilteller durch seine Ausbildung als Kugelkalotte eine hohe Formsteifigkeit, die es ermöglicht, die Kugelkalotte sehr dünnwandig und damit besonders leicht auszubilden, wodurch die vom Schwimmer aufzubringenden Auftriebskräfte merkbar verringert werden. Auch legt sich die gekrümmte Obefläche der Kugelkalotte wesentlich sicherer als eine Kegelfläche über den ganzen Umfang an den Kegelsitz an und gewährleistet dadurch eine bessere Ventilabdichtung.

Da der Schwimmer durch eine in den Innenraum der Kugelkalotte hineinragende Kegelkappe nach oben hin abgeschlossen ist, wird der für den Auftrieb maßgebende Hohlraum des Schwimmers erheblich erweitert und durch die versteifende Kegelform der Schwimmerkappe wird eine hohe Beulfestigkeit erreicht, die eine dünnere Schwimmerwandung und damit ein leichteres Gewicht des Schwimmers ermöglicht. Durch das geringere Gewicht von Schwimmer und Kugelkalotte kann das Be- und Entlüftungsventil auch kleiner ausgebildet werden. Hierbei wird der Kalotteninnenraum zur Unterbringung des Schwimmeroberteils benutzt, so daß sich insgesamt eine kompakte Ventilbauweise ergibt.

Durch das Ausgleichsspiel zwischen dem an der Kugelkalotte sitzenden Führungszapfen und der fest am Ventilgehäuse vorgesehenen Führungsbuchse entsprechend Anspruch 2 wird auch bei auftretenden Fertigungstoleranzen eine sichere zentrische Anlage der Kugelaußenfläche des Ventiltellers an den metallischen Kegelsitz gewährleistet.

Wird unterhalb der metallischen Kegelsitzes des Hauptventils eine mit Übermaß an der Kugelkalotte anliegende elastische Dichtscheibe gemäß Anspruch 3 vorgesehen, so wird durch die elastische Verformung des Dichtscheibenwerkstoffes eine die absolute Dichtheit gewährleistende Weichdichtung geschaffen, während der Kegelsitz mit der zentrisch hierin sitzenden Kugelkalotte eine die elastische Verformung der Dichtscheibe begrenzende und die durch den Mediumdruck auftretenden Kräfte aufnehmende metallische Dichtanlage bildet.

Eine Weiterentwicklung der Erfindung wird in den Merkmalen des Anspruchs 4 gesehen, wodurch ein besonders einfaches Hilfsventil für die Betriebsentlüftung geschaffen wird, für das als Verschlußkörper nur eine kleine auf die Schwimmerkappe aufgelegte elastische Dichtscheibe benötigt wird und das wegen der nur bis zur Querbohrung reichenden Entlüftungsbohrung im Führungszapfen mit einem kurzen, direkt in den Ventilauslaß einmündenden Ausblasweg arbeitet und von oben nicht verstopfen kann.

Es ist zwar aus der DD-A-72 952 ein Be- und Entlüftungsventil bekannt, bei dem ein kegelförmiger Ventilteller für den Kegelsitz des Hauptventils einen in einer Führungsbuchse gleitenden Führungszapfen trägt, der zur Bildung des Hilfsventil mit einer axialen Entlüftungsbohrung versehen ist, die vom Schwimmer geschlossen wird. Bei diesem Ventil mündet jedoch eine lange Entlüftungsbohrung nach oben ins Freie, die leicht verstopfen kann. Außerdem ist der Schwimmer hier als sperrige Schwimmkugel ausgebildet, die gegenüber dem Zylinderschwimmer ein wesentlich geringeres Schwimmervolumen besitzt. Eine Leitschale für den Schwimmer fehlt hier ganz, so daß die Schwimmkugel beim Entlüften der Rohrleitung leicht von der Luftströmung mitgerissen werden kann. Auch müßt die ganze Schwimmkugeloberfläche mit einer elastischen Auflage versehen werden, wenn man einen elastischen Abschluß für das Hilfsventil erhalten will, und der kegelförmig ausgebildete Ventilteller legt sich bereits bei geringen Fertigungsungenauigkeiten nicht mehr satt an den Kegelsitz des Hauptventils an.

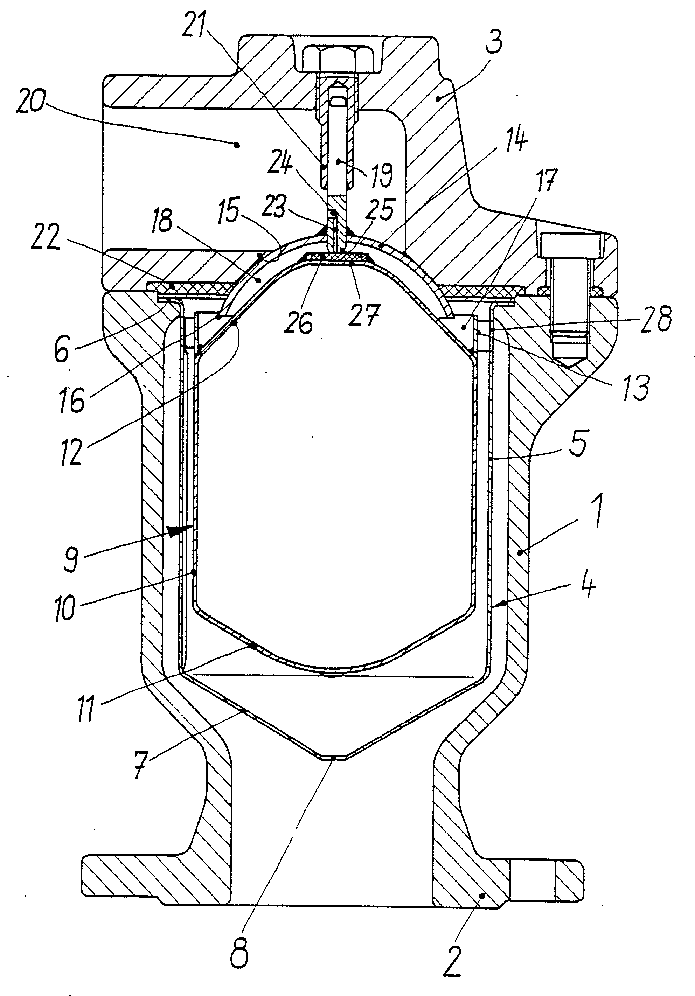

Die Erfindung wird anhand eines Ausführungsbeispieles in der Zeichnung näher erläutert.

Das dargestellte Be- und Entlüftungsventil besteht aus dem Ventilgehäuse 1 mit Eintrittflansch 2 und dem auf dem Ventilgehäuse befestigten Gehäusedeckel 3. Im Innern des Ventilgehäuses 1 ist die aus dünnwandigem Blech hergestellte Leitschale 4 eingebaut, die aus einem Zylindermantel 5 mit einem oberen, zwischen dem Ventilgehäuse 1 und dem Gehäusedeckel 3 eingespannten Rand 6 und einem Trichterboden 7 mit Trichtereinströmöffnung 8 besteht. In der zylindrischen Leitschale 4 ist der dünnwandige Schwimmer 9 axial geführt, der aus einem Zylindermantel 10 mit unterem abgerundetem Kegelboden 11 und oberer Kegelkappe 12 gebildet wird. Der Schwimmer 9 trägt im Durchmesserbereich seines Zylindermantels 10 ein nach oben vorspringendes Leitrohr 13, und der Ventilteller 14 ist als Kugelkalotte ausgebildet, die sich in der Ventilschließstellung gegen den Kegelsitz 15 des Hauptventils legt. Der zum Schwimmer 9 hin gekrümmte Außenrand 16 der Kugelkalotte 14 greift hierbei in den Hohlraum 17 des Leitrohres 13 ein und die Kegelkappe 12 des Schwimmers 9 ist mit ihrem oberen Teil in dem Innenraum 18 der Kugelkalotte 14 untergebracht.

Die Kugelkalotte 14 trägt in der Mitte einen sich senkrecht nach oben erstreckenden Führungszapfen 19, der in einer fest am Gehäusedeckel 3 im Ventilauslaß 20 sitzenden Führungsbuchse 21 gleitet. Der Führungszapfen 19 ist mit Spiel in der Führungsbuchse 21 gelagert, das die Fertigungsungenauigkeiten ausgleichen und eine zentrische Anlage der Kugelkalotte 14 an den metallischen Kegelsitz 15 gewährleisten soll. Unterhalb des metallischen Kegelsitzes 15 ist eine elastische Dichtscheibe 22 vorgesehen, die sich mit Übermaß an der Kugelkalotte 14 anlegt und die Weichdichtung für das Hauptventil 14, 15 bildet.

Der Führungszapfen 19 ist mit einer kurzen axialen Bohrung 23 versehen, an die sich eine im Durchmesser größere Querbohrung 24 anschließt, die frei in den Ventilauslaß 20 mündet. Diese im Führungszapfen 19 vorgesehene Axialbohrung 23 mit Querbohrung 24 bildet die Entlüftungsöffnung für das Hilfsventil, wobei das durch die Kugelkalotte 14 hindurchragende Ende 25 des Führungszapfens 19 an der als Verschlußkörper für das Hilfsventil wirkenden elastischen Dichtscheibe 26 anliegt, die auf einer Abflachung 27 der Kegelkappe 12 des Schwimmers 9 auswechselbar aufgebracht ist.

Die Wirkungsweise des Be- und Entlüftungsventils ist folgende :

Bei der Entleerung der nicht näher gezeigten Rohrleitung, auf die das Be- und Entlüftungsventil mit dem Eintrittsflansch 2 aufgesetzt ist, fällt der Wasserspiegel im Ventilgehäuse 1 ganz ab und der Schwimmer 9 bewegt sich durch sein Eigengewicht nach unten. Infolge des sich aufbauenden Unterdrucks und durch das Eigengewicht löst sich auch die Kugelkalotte 14 vom Kegelsitz 15 und bewegt sich nach unten in die Ventiloffenstellung. Dadurch kann die Luft über das Hauptventil 14, 15 einströmen und die Rohrleitung belüften.

Wird die Rohrleitung wieder mit Flüssigkeit gefüllt, so strömt die in der Rohrleitung enthaltene Luft über das offene Hauptventil 14, 15 nach außen ins Freie, wobei der Hauptstrom zwischen der Leitschale 4 und dem Ventilgehäuse 1 nach oben und über die Austrittsschlitze 28 der Leitschalte durch den Kegelsitz 15 zum Ventilauslaß 20 strömt, während der Nebenstrom zwischen Leitschale 4 und Schwimmer 9 nach oben zum Kegelsitz 15 und dann zum Ventilauslaß 20 geleitet wird. Ein Mitreißen des Ventiltellers 14 in die Schließstellung wird hierbei durch die Anordnung der Leitschale 4 und durch die besondere Ausbildung des Schwimmers 9 mit Leitrohr 13 und des Ventiltellers als Kugelkalotte 14, dessen Außenrand 16 in den Hohlraum 17 des Leitrohres 13 hineinragt, sicher vermieden. Ist die Rohrleitung vollständig entlüftet und steigt der Flüssigkeitsspiegel in dem Ventilgehäuse 1 an, so hebt sich der Schwimmer 9 und drückt die Kugelkalotte 14 in den Kegelsitz 15. Die Anpressung an den Kegelsitz 15 erfolgt beim Aufbau des Mediumdruckes.

Haben sich während des Betriebes Luftbläs-schen in der in der Rohrleitung strömenden Flüssigkeit angesammelt, so treten diese in das Ventilgehäuse 1 ein und senken den Flüssigkeitsspiegel. Hierbei wandert der Schwimmer 9 nach unten, so daß die Dichtscheibe 26 die Entlüftungsbohrung 23 des Hilfsventils freigibt und die Luft über diese kleine Entlüftungsbohrung 23 entweichen kann. Die Kugelkalotte 14 wird hierbei durch den inneren Überdruck fest auf dem Kegelsitz 15 gehalten. Steigt der Flüssigkeitsspiegel wieder an, hebt sich der Schwimmer 9 und die Dichtscheibe 26 verschließt die Entlüftungsbohrung 23 des Hilfsventils.

**Patentansprüche**

1. Selbsttätiges Be- und Entlüftungsventil für Flüssigkeiten in Rohrleitungen und Behältern, mit einem Hauptventil (14, 15) für die Schnellbe-oder -entlüftung und einem Hilfsventil (25, 26) für die Betriebsentlüftung, die beide von einem gemeinsamen Schwimmer (9) mit Zylindermantel (10) und abgerundetem Kegelboden (11) gesteuert werden, der in einer gehäusefesten, den Schwimmer (9) nach unten und seitlich gegen die Strömung abschirmenden zylindrischen Leitschale (4) mit Trichterboden (7) und Trichtereinströmöffnung (8) axial geführt ist, wobei sich oberhalb des Schwimmers (9) ein separater, vom Schwimmer (9) gegen den Kegelsitz (15) des Hauptventils (14, 15) bewegbarer Ventilteller (14) befindet, der einen sich nach oben erstreckenden Führungszapfen (19) trägt, welcher in einer fest am Ventilauslaß (20) sitzenden Führungsbuchse (21) gleitet, dadurch gekennzeichnet, daß der Ventilteller des Hauptventils als Kugelkalotte (14) ausgebildet ist und der Schwimmer (9) ein nach oben vorspringendes Leitrohr (13) trägt, in dessen Hohlraum (17) der zum Schwimmer hin gekrümmte Außenrand (16) der Kugelkalotte (14) eingreift, wobei der Schwimmer (9) durch eine in den Innenraum (18) der Kugelkalotte (14) hineinragende Kegelkappe (12) nach oben hin abgeschlossen ist.

2. Be- und Entlüftungsventil nach Anspruch 1, dadurch gekennzeichnet, daß der fest an der Kugelkalotte (14) sitzende Führungszapfen (19) mit einem eine zentrische Anlage der Kugelkalotte (14) an den metallischen Kegelsitz (15) des Hauptventils (14, 15) ermöglichenden Ausgleichsspiel in der Führungsbuchse (21) gelagert ist.

3. Be- und Entlüftungsventil nach den Ansprüchen 1 und 2, dadurch gekennzeichnet, daß unterhalb des metallischen Kegelsitzes (15) des Hauptventils (14, 15) eine mit Übermaß an der der Kugelkalotte (14) anliegende elastische Dichtscheibe (22) vorgesehen ist.

4. Be- und Entlüftungsventil nach den Ansprüchen 1 bis 3, dadurch gekennzeichnet, daß der Führungszapfen (19) der Kugelkalotte (14) zur Bildung des Hilfsventils mit einer kurzen axialen und zum Schwimmer (9) hin offenen Entlüftungsbohrung (23) versehen ist, die seitlich über eine im Durchmesser größere Querbohrung (24) frei in den in Strömungsrichtung hinter dem Hauptventil (14, 15) liegenden Ventilauslaß (20) mündet, wobei der Führungszapfen (19) mit seinem die Kugelkalotte (14) durchdringenden Ende (25) an einer Abflachung (27) der Schwimmerkappe (12) zur Anlage kommt, welche mit einer auswechselbaren elastischen Dichtscheibe (26) als Verschlußkörper für das Hilfsventil versehen ist.

**Claims**

1. Automatic air intake and venting valve for liquids in pipes and containers, comprising a principal valve (14, 15) for rapid air intake or venting and an auxiliary valve (25, 26) for operational venting which are both controlled by a common float (9) comprising a cylindrical shell (10) and a rounded-off cone base (11), which is axially located within a fixedly-housed cylindrical guiding case (4) screening the float (9) off against the flow downwards and laterally and comprising a funnel base (7) and a funnel inflow opening (8), a separate valve head (14) displaceable by the float (9) against the cone seat (15) of the principal valve (14, 15), which carries an upwardly extending guiding pin (19) which slides in a guiding sleeve (21) fixedly installed in the valve outlet (20), being situated above the float (9), characterised in that the valve head of the principal valve is constructed as a spherical cap (14) and the float carries an upwardly projecting locating tube (13) whose cavity (17) has engaged in it the outer rim (16) of the spherical cap (14) curved towards the float (9), the float (9) being closed off in upward direction by a conical cover (12) projecting into the internal volume (18) of the spherical cap (14).

2. Air intake and venting valve according to claim 1, characterised in that the guiding pin (19) fixedly situated on the spherical cap (14) is engaged in the guiding sleeve (21) with a take-up clearance allowing a central contact of the spherical cap (14) on the metal cone seat (15) of the principal valve (14, 15).

3. Air intake and venting valve according to claims 1 and 2, characterised in that an oversized sealing washer (22) bearing on the spherical cap (14) is provided beneath the metal cone seat (15) of the principal valve (14, 15).

4. Air intake and venting valve according to claims 1 to 3, characterised in that for the purpose of forming the auxiliary valve, the guiding pin (19) of the spherical cap (14) is provided with a short venting bore (23) which is axial and open towards the float (9), which leads laterally and unobstructedly *via* a diametrically larger transverse bore (24) into the valve outlet (20) lying behind the principal valve (14, 15) in the direction of flow, the guiding pin (19) coming into contact with its extremity (25) traversing the spherical cap (14) on a flat portion (27) of the float cover (12), which is equipped with a replaceable elastic sealing washer (26) as a shut-off element for auxiliary valve.

**Revendications**

1. Valve d'aération et de désaération automatique pour des liquides contenus dans des conduites et des récipients, pourvue d'une soupape principale (14, 15) pour l'aération ou la désaération rapide et d'une soupape auxiliaire (25, 26) pour la désaération en service, toutes deux commandées par un flotteur commun (9) qui est muni d'une enveloppe cylindrique (10) et d'un fond conique arrondi (11) et qui est guidé axialement dans une enveloppe de guidage cylindrique (4) solidaire du boîtier de la valve et pourvue d'un fond en forme d'entonnoir (7) et d'une ouverture d'admission de l'écoulement (8), cette enveloppe protégeant le flotteur (9) vers le bas et latéralement contre l'écoulement, tandis qu'au-dessus du flotteur (9) se trouve une tête de soupape (14) séparée, apte à être déplacée par le flotteur (9) contre le siège conique (15) de la soupape principale (14, 15) et portant une broche-guide (19) qui s'étend vers le haut et qui coulisse dans un manchon de guidage (21) logé à demeure dans l'orifice d'évacuation (20) de la valve, caractérisée en ce que la tête de soupape de la soupape principale est réalisée sous la forme d'une calotte sphérique (14) et le flotteur (9) porte un tube de guidage (13) saillant vers le haut et dans la cavité creuse (17) duquel s'engage le bord extérieur (16) de la calotte sphérique (14) recourbé vers le flotteur, le flotteur (9) étant fermé vers le haut par un capuchon conique (12) s'avançant dans l'espace intérieur (18) de la calotte sphérique (14).

2. Valve d'aération et de désaération selon la revendication 1, caractérisée en ce que la broche-guide (19) solidaire de la calotte sphérique (14) est montée dans le manchon de guidage (21) avec un jeu de compensation permettant un centrage de la position de la calotte sphérique (14) sur le siège conique métallique (15) de la soupape principale (14, 15).

3. Valve d'aération et de désaération selon les revendications 1 et 2, caractérisée en ce qu'en dessous du siège conique métallique (15) de la soupape principale (14, 15), est prévue une rondelle d'étanchéité élastique (22) s'appliquant contre la calotte sphérique (14) par une partie excédentaire.

4. Valve d'aération et de désaération selon les revendications 1 à 3, caractérisée en ce que la broche-guide (19) de la calotte sphérique (14) est en vue de la formation de la soupape auxiliaire, pourvue d'un court perçage axial de désaération (23) s'ouvrant vers le flotteur (9) et débouchant librement sur le côté, par un perçage transversal (24) de plus grand diamètre, dans l'orifice d'évacuation (20) de la valve situé en aval la soupape principale (14, 15) selon la direction de l'écoulement, la broche-guide (19) venant s'appliquer par son extrémité pénétrant dans la calotte sphérique (14), contre un méplat (27) du capuchon (12) du flotteur, lequel est pourvu d'un disque d'étanchéité élastique interchangeable (26) constituant l'obturateur de la soupape auxiliaire.